# EUROPÄISCHE PATENTANMELDUNG

(11) **EP 1 336 933 A1**
(43) Veröffentlichungstag der Anmeldung: **20.08.2003**
(21) Anmeldenummer: 03003655.2
(22) Anmeldetag: 18.02.2003
(51) Int. Cl.: G06K 19/077, B29C 65/00

(54) **Verfahren zum Implantieren von Chipmodulen in Datenträgerkarten**

(30) Priorität: 19.02.2002 DE 10207002
(71) Anmelder: Orga Kartensysteme GmbH, 33104 Paderborn (DE)
(72) Erfinder: Zander, Jörg, 23909 Ratzenburg (DE); Dohse, Stefan, 23623 Ahrensbök (DE)

(57) **Zusammenfassung**

Die Erfindung betrifft ein Verfahren zum Implantieren von Chipmodulen in den Kartenkörper von Datenträgerkarten, bei dem die dauerhafte Festlegung der Chipmodule (1) durch einen Reibschweißvorgang erfolgt, bei dem Oberflächenteilbereiche (10) von Chipmodul (1) und Kartenkörper (7) miteinander in Berührung gebracht werden und durch eine mehrmalige hin- und hergehende schnelle Verschiebung der kontaktierten Oberflächenteilbereiche (10) relativ zueinander in Folge der entstehenden Reibungswärme die betreffenden Oberflächenteilbereiche partiell aufgeschmolzen und eine dauerhafte stoffschlüssige Verbindung zwischen den beteiligten Bauelementen hergestellt wird.

## Beschreibung

Die Erfindung betrifft ein Verfahren zum Implantieren von einem aus einem Trägerelement und mindestens einem auf diesem Trägerelement angeordneten elektronischen Bauelement gebildeten Chipmodul in den Kartenkörper einer Datenträgerkarte, wobei das Chipmodul in eine für dessen Aufnahme vorgesehene Ausnehmung des Kartenkörpers eingesetzt und dauerhaft festgelegt wird und wobei sowohl der Kartenkörper als auch das Trägerelement im Wesentlichen aus thermoplastischem Kunststoffmaterial bestehen.

Datenträgerkarten, in welche ein Chipmodul eingebaut ist, sind bereits hinlänglich bekannt und werden als Kreditkarten, Bankkarten, Barzahlungskarten und dergleichen in den verschiedensten Dienstleistungssektoren, beispielsweise im bargeldlosen Zahlungsverkehr oder im innerbetrieblichen Bereich zur Zugangsberechtigung verwendet.

Bei derartigen Karten wird zunächst der Kartenkörper aus in der Regel thermoplastischem Kunststoffmaterial hergestellt, wobei dies durch das Zusammenlaminieren von verschiedenen einzelnen Kunststoffschichten oder im Spritzgussverfahren geschehen kann. Wird der Kartenkörper im Spritzgussverfahren hergestellt, so kann in diesen die Ausnehmung zur Aufnahme des Chipmoduls vorteilhafterweise in einem Arbeitsgang mit integriert werden. Es besteht jedoch darüber hinaus auch die Herstellungsvariante, die Ausnehmung in den Chipkartenkörper in einem dem Spritzgussverfahrensschritt nachgeschalteten Bearbeitungsschritt durch Fräsen herzustellen. Das in den Kartenkörper einzubettende Chipmodul wird in einem separaten Arbeitsschritt hergestellt, in dem auf dem Trägerelement in der Regel auf einer Flachseite mindestens ein elektronisches Bauelement in Form eines Mikrochips angeordnet wird und üblicherweise auf der gegenüberliegenden Flachseite Kontaktflächen hergestellt werden, die über geeignete Verbindungen wie beispielsweise Bonddrähte mit dem Mikrochip verbunden werden. Das so vorbereitete Chipmodul wird dann in die Ausnehmung des Kartenkörpers der Datenträgerkarte implantiert. Dabei befinden sich die Kontaktflächen auf der zur Außenseite des Kartenkörpers gerichteten Seite des Trägerelementes, wohingegen der Mikrochip in die üblicherweise als Sackloch ausgeführte Ausnehmung des Kartenkörpers hineinragt. Die dauerhafte Festlegung des Chipmoduls am Kartenkörper geschieht hier üblicherweise mittels eines Heißklebers oder Kaltklebers, der auf die Randbereiche des Trägerelementes an der dem Kartenkörper zugewandten Flachseite aufgetragen wird und das Trägerelement mit einer korrespondierenden Anlagefläche an oder in der Ausnehmung des Kartenkörpers verbindet.

Die bevorzugte Verwendung eines Heißklebers erfordert es, die mit dem Kleber versehenen Bereiche des Trägerelementes beim Implantieren des Chipmoduls aufzuheizen, was üblicherweise durch einen Heizstempel geschieht. Hierbei besteht der Nachteil, dass nicht nur die unmittelbar betroffenen Bereiche des Trägerelementes erwärmt werden, sondern darüber hinaus auch der auf dem Trägerelement befindliche Mikrochip selbst.

Darüber hinaus besteht bei Verwendung von Klebern die Gefahr, dass beim Hineindrücken des Chipmoduls in die Ausnehmung des Kartenkörpers an den Randbereichen des Trägerelementes Kleber nach außen tritt und auf der Kartenoberfläche unerwünschte Erhebungen und Unregelmäßigkeiten erzeugt. Diese müssen in einem abschließenden Verfahrensschritt umständlich mechanisch entfernt werden.

Aufgabe der vorliegenden Erfindung ist es daher, ein Verfahren zum Implantieren von Chipmodulen in Datenträgerkarten bereitzustellen, bei dem die dauerhafte Festlegung des Chipmoduls auf einfache und kostengünstige Weise vorgenommen wird.

Diese Aufgabe wird erfindungsgemäß dadurch gelöst, dass die dauerhafte Festlegung des Chipmoduls durch einen Reibschweißvorgang erfolgt, bei dem Oberflächenteilbereiche von Trägerelement und Kartenkörper miteinander in Berührung gebracht werden und durch eine mehrmalige hin- und hergehende schnelle Verschiebung der kontaktierten Oberflächenteilbereiche relativ zueinander in Folge der entstehenden Reibungswärme die betreffenden Oberflächenteilbereiche partiell aufgeschmolzen und verbunden werden.

Der Vorteil des erfindungsgemäßen Verfahrens besteht vorrangig darin, dass die zum Aufschmelzen der Materialien des Kartenkörpers sowie des Trägerelementes im Bereich der Kontaktstellen nur zu einer partiellen Materialerwärmung kommt, da bei der Bewegung zwischen Trägerelement und Kartenkörper Reibungswärme nur in diesen Oberflächenteilbereichen erzeugt wird. Wegstrecke und Dauer der hin- und hergehenden Verschiebung kann dabei genau dosiert werden, dass nur die zum Aufschmelzen der Kunststoffmaterialien notwendige geringe Erwärmung an der Kontaktstelle auftritt.

Besondere Ausgestaltungen des Gegenstandes der Erfindung ergeben sich in Zusammenschau mit der technischen Lehre des Anspruches 1 zusätzlich aus den Markmalen der Unteransprüche.

Für die Verschiebung der kontaktierten Oberflächenbereiche zueinander bestehen im Wesentlichen zwei Möglichkeiten. Zum einen kann die Verschiebung geradlinig erfolgen, wobei die Distanz zwischen den Umkehrpunkten der Verschiebung etwa im Bereich von 0,1 mm bis 0,2 mm anzusetzen ist.

Dieses Verfahren des Reibschweißens mittels linearer Verschiebung kontaktierter Oberflächenteilbereiche kann auch als Linearreibschweißen bezeichnet werden.

Darüber hinaus besteht die Möglichkeit, dass die Verschiebung der kontaktierten Oberflächenteilbereiche zueinander im Wesentlichen rotatorisch erfolgt. Hierbei werden das Trägerelement und der Kartenkörper mehrere Male schnell gegeneinander verdreht. Auch hier wird durch die Verdrehung im Bereich der Kontaktstelle Reibungswärme erzeugt, so dass durch partielles Aufschmelzen der thermoplastischen Kunststoffmaterialien von Trägerelement und Kartenkörper eine stoffschlüssige Verbindung zwischen beiden erzeugt wird, die ohne Zerstörung der Chipkarte nicht mehr lösbar ist.

Durch das erfindungsgemäße Verfahren können sowohl der Arbeitsschritt des Beschichtens des Trägerelementes mit einem Klebstofffilm als auch die späteren Nacharbeiten zur Beseitigung überschüssiger Klebstoffreste auf der Oberfläche der jeweiligen Datenträgerkarte entfallen, was zum einen die Taktzeiten bei der Massenproduktion derartiger Karten verkürzt und darüber hinaus eine Erwärmung der unter Umständen empfindlichen elektronischen Bauelemente auf dem Trägerelement beseitigt.

Um eine dauerhafte stoffschlüssige Verbindung zwischen Trägerelement und Kartenkörper zu erreichen, ist es dabei vorteilhaft, wenn die Materialien beider Bauteile identisch sind, was auch unter Gesichtspunkten eines späteren Recyclings derartiger Karten positiv zu bewerten ist.

Für die Verwendung des auch als Rotationsreibschweißen bezeichneten Verfahrens, bei dem die Verschiebung der kontaktierten Oberflächenteilbereiche von Trägerelement und Kartenkörper im Wesentlichen rotatorisch erfolgt, ist es vorteilhaft, dem Trägerelement eine rotationssymetrische Grundrissgestaltung zu geben. Diese Maßnahme kann ergänzt werden dadurch, dass auch die Ausnehmung für die Aufnahme des Trägerelementes im Kartenkörper rotationssymetrisch ausgeführt wird.

Um die Taktzeiten bei der Herstellung der Datenträgerkarten weiter zu verkürzen, kann es entsprechend einer vorteilhaften Weiterbildung der Erfindung zusätzlich vorteilhaft sein, dass den kontaktieren Oberflächenteilbereichen durch eine zusätzliche Vorrichtung Wärmeenergie zugeführt wird. Die zusätzliche Wärmeenergie führt zu einem schnelleren Aufschmelzen der Materialien im Bereich der Kontaktstelle, so dass eine schnellere Fixierung der Chipmodule im Kartenkörper vonstatten gehen kann.

Die Zuführung der Wärmeenergie kann hierbei beispielsweise mittels eines an der den kontaktierten Oberflächen abgewandten Außenseite des Trägerelementes aufgesetzten Heizstempel erfolgen. Darüber hinaus besteht die Möglichkeit, die Wärmeenergiezufuhr mittels einer Sonotrode vorzunehmen, die Ultraschallschwingungen in die kontaktierten Oberflächenteilbereiche von Trägerelement und Kartenkörper einbringt. Durch die Ultraschallschwingungen werden die Moleküle der Kunststoffmaterialien im Bereich der Kontaktstelle in Bewegung versetzt, wodurch partiell Wärme erzeugt wird, die den Reibschweißprozess zusätzlich unterstützen kann.

Das erfindungsgemäße Verfahren wird im Folgenden anhand der beigefügten Figuren beispielhaft näher erläutert.
Es zeigt:
- Figur 1: eine Schnittdarstellung durch einen Teilbereich einer Datenträgerkarte mit eingesetztem Chipmodul,
- Figur 2A: eine Draufsicht entsprechend des Pfeiles B aus Figur 1, entsprechend einer ersten Ausführungsvariante des für das erfindungsgemäße Verfahren geeigneten Chipmoduls und
- Figur 2B: eine Draufsicht entsprechend dem Pfeil B aus Figur 1 mit einer zweiten Ausgestaltungsvariante eines für das erfindungsgemäße Verfahren geeigneten Chipmoduls.

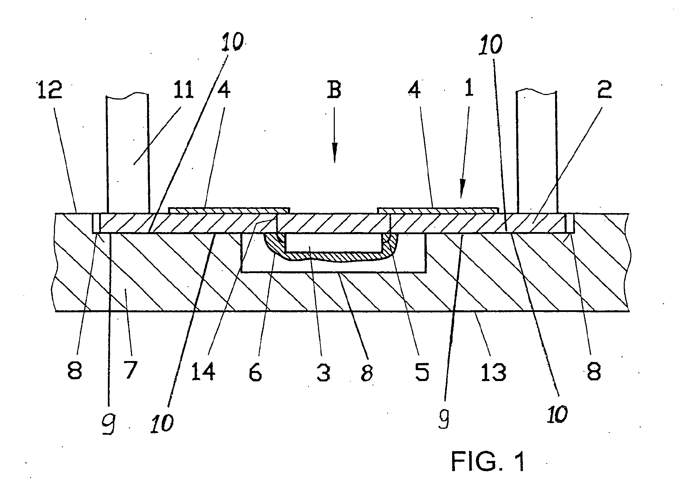

In der Figur 1 ist der Kartenkörper 7 einer plattenförmigen Datenträgerkarte aus thermoplastischem Kunststoff mit zueinander paralleler Vorderseite 12 und Rückseite 13 dargestellt. In den Kartenkörper 7 ist ein in seiner Gesamtheit mit 1 bezeichnetes Chipmodul eingesetzt. Das Chipmodul 1 besteht im Wesentlichen aus einem plattenförmigen Trägerelement 2, welches ebenfalls aus thermoplastischem Kunststoff hergestellt ist, auf dessen dem Kartenkörper 7 zugewandten Seite ein elektronisches Bauelement, beispielsweise ein Mikrochip (IC) aufgesetzt ist. Auf der dem Kartenkörper 7 abgewandten Oberseite des Trägerelementes befinden sich eine Mehrzahl von Kontaktflächen 4 vorzugsweise aus Kupfer, die zu einem kontaktbehafteten Datenaustausch des Mikrochips 3 mit externen Kartenlesegeräten dienen.

In diesem Zusammenhang ist anzumerken, dass auch Chipmodule bekannt sind, bei denen an der Oberseite keine Kontaktflächen vorhanden sind sondern der Datenaustausch mit externen Datenträgerkartenlesegeräten mittels einer in den Kartenkörper integrierten Spule kontaktlos erfolgt.

Die Kontaktflächen 4 sind über Bonddrähte 5, welche in im Trägerelement vorhandenen Bohrungen 14 verlaufen, mit dem Mikrochip 3 verbunden. Zum Schutz des Mikrochips 3 sowie der am Mikrochip angeschlossenen Bonddrähte 5 ist über beiden Bauelementen ein Vergusshügel 6 angeordnet. Das Chipmodul 1 weist somit in der hier dargestellten Bauform eine plattenförmige Gestalt mit nach unten vorstehendem Vergusshügel 6 auf.

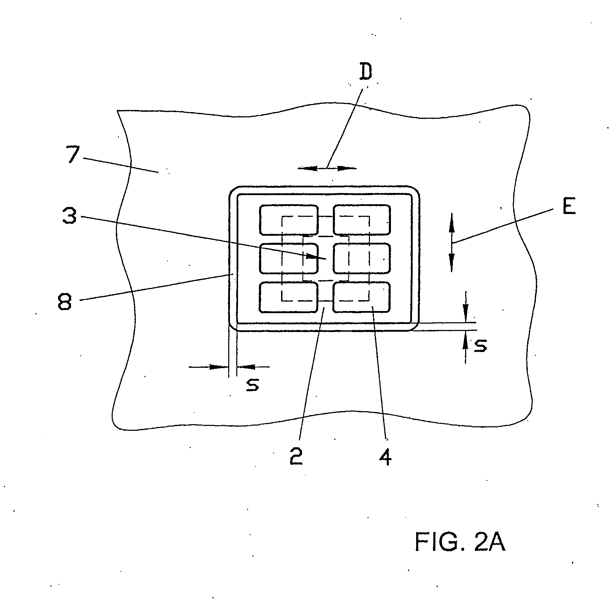

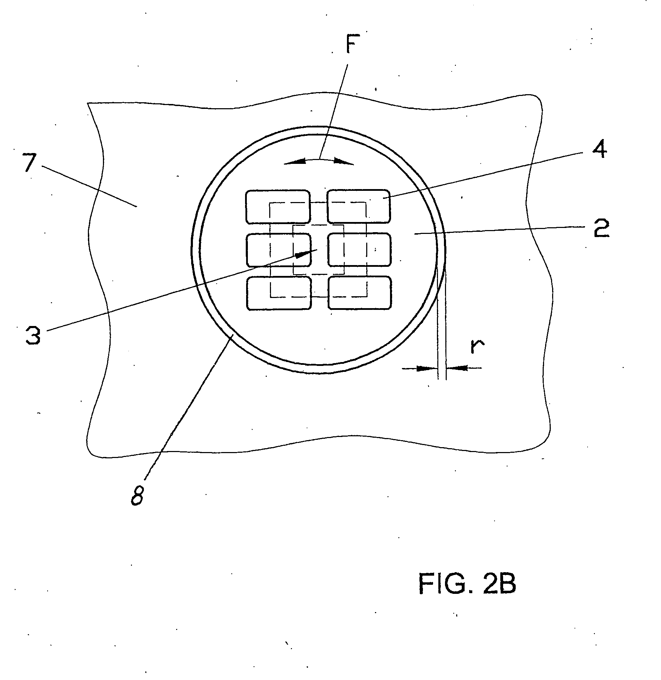

Zur Aufnahme in den Kartenkörper 7 ist daher in dessen dem Chipmodul 1 zugewandten Vorderseite 12 eine Ausnehmung 8 in Form einer Vertiefung eingearbeitet, die vom Umfang her etwas größer ist als das Trägerelement 2 des Chipmoduls 1. Die Ausnehmung 8 besteht im Wesentlichen aus zwei vom Umfang her unterschiedlich großen Teilbereichen, so dass sich innerhalb der Ausnehmung 8 eine Auflageschulter 9 für das Trägerelement 2 ergibt. Die Auflageschulter 9 ist umlaufend ausgeführt, wie dies durch die gestrichelte Darstellung in den Figuren 2A und 2B deutlich wird. Die zweistufige Ausnehmung 8 dient dazu, zum einen die Auflageschulter 9 als Oberflächenteilbereich für die Anlage des Trägerelementes 2 am Kartenkörper 7 zu bilden und andererseits eine Kavität für die Aufnahme des Mikrochips 3 mit seinem Vergusshügel 6 bereitzustellen.

Erfindungswesentlich für das Verfahren zum Implantieren des Chipmoduls 1 in den Kartenkörper 7 einer Datenträgerkarte ist hierbei die besondere Art der dauerhaften Festlegung des Chipmoduls 1 innerhalb der Ausnehmung 8. Wie oben bereits geschildert, liegt das Trägerelement 2 mit seinem Oberflächenteilbereich 10 zunächst lose innerhalb der Ausnehmung 8 auf der Auflageschulter 9 des Kartenkörpers. Um eine feste Verbindung zwischen beiden Bauelementen zu schaffen, werden anschließend Trägerelement und Kartenkörper durch eine mehrmalige hin- und hergehende schnelle Verschiebung relativ zueinander bewegt. Diese Bewegung kann translatorisch entsprechend der Pfeile D und E in Figur 2A erfolgen oder rotatorisch entsprechend dem Pfeil F aus Figur 2B. Durch die hin- und hergehende Verschiebung wird in Folge auftretender Reibung in dem kontaktierten Oberflächenteilbereich 10 Wärmeenergie erzeugt, die auf Grund der Materialauswahl von Kartenkörper und Trägerelement zu einem partiellen Aufschmelzen in den angesprochenen Oberflächenteilbereichen führen. Im aufgeschmolzenen Zustand können sich die Kunststoffmaterialien im Bereich der Fügenaht miteinander vermischen. Nach anschließender Abkühlung auf eine Temperaur unterhalb der Schmelztemperaturen beider Materialien liegt somit eine stoffschlüssige Verbindung zwischen Kartenkörper und Chipmodul vor, die ohne Beschädigung bzw. Zerstörung nicht mehr gelöst werden kann.

Wie aus der Figur 2A ersichtlich wird, ist für die translatorische Verschiebung des Trägerelementes 2 in Bezug auf den Kartenkörper 7 ein Verschiebeweg s bereitzustellen. Dieser notwendige Verschiebeweg s bedingt, dass die Umrissgröße des Trägerelementes 2 etwas kleiner gewählt werden muss als die Grundrissgröße der Ausnehmung 8, so dass sich an den Seitenflächen des Trägerelementes 2 jeweils ein Spalt im Bereich von 0,1 mm bis 0,2 mm ergibt.

Bei der alternativen Ausführungsvariante entsprechend der Figur 2B ist das Trägerelement 2 im Umriss rotationssymetrisch ausgeführt. Entsprechend dieser Umrissgestaltung weist auch der Grundriss der Ausnehmung 8 zumindest im Bereich der Auflageschulter 9 eine im Wesentlichen runde Gestalt auf. Die Erzeugung der Wärmeenergie wird in diesem Fall durch eine rotatorische Verschiebung entsprechend des Pfeiles F des Trägerelementes 2 in Bezug auf den Kartenkörper 7 erzielt. Hierbei kann der Spalt r zwischen der Innenkante der Ausnehmung 8 und der Außenkante des Trägerelementes 2 geringer ausfallen als im Beispiel der Figur 2A, so dass sich unter Umständen eine höhere Endqualität der Datenträgerkarte ergibt.

Um die Verschmelzung des Trägerelementes 2 mit dem Kartenkörper 7 im Bereich des Oberflächenteilbereiches 10 zu unterstützen, kann es entsprechend einer vorteilhaften Weiterbildung des erfindungsgemäßen Verfahrens hilfreich sein, dem kontaktierten Oberflächenteilbereich 10 durch eine zusätzliche Vorrichtung Wärmeenergie zuzuführen. Dies kann beispielsweise durch einen Heizstempel 11 geschehen, der wie dies der Figur 1 zu entnehmen ist, der neben den Kontaktflächen 4 auf die Oberseite des Trägerelementes drückt und somit in diesem Bereich eine partielle Erwärmung des Trägerelementmateriales herbeiführt

Alternativ dazu kann in dem Bereich, in dem der Heizstempel 11 aufgesetzt wird auch eine so genannten Sonotrode mit dem Trägerelement 2 in Kontakt gebracht werden. Durch eine Sonotrode werden Ultraschallschwingungen in das Trägerelement 2 und somit in den kontaktierten Oberflächenteilbereich 10 von Trägerelement 2 und Kartenkörper 7 eingeleitet.

### Bezugszeichenliste

1. Chipmodul
2. Trägerelement
3. Mikrochip (IC)
4. Kontaktfläche
5. Bonddraht
6. Vergusshügel
7. Kartenkörper
8. Ausnehmung
9. Auflageschulter
10. Oberflächenteilbereich
11. Heizstempel/Sonotrode
12. Vorderseite
13. Rückseite
14. Bohrung

## Patentansprüche

1. Verfahren zum Implantieren von einem aus einem Trägerelement und mindestens einem auf diesem Trägerelement angeordneten elektronischen Bauelement (Chip) gebildeten Chipmodul in den Kartenkörper von Datenträgerkarten, wobei das jeweilige Chipmodul in eine für dessen Aufnahme vorgesehene Ausnehmung des Kartenkörpers der Datenträgerkarte eingesetzt und dauerhaft festgelegt wird, und wobei sowohl der Kartenkörper als auch das Trägerelement im Wesentlichen aus thermoplastischem Kunststoffmaterial bestehen, **dadurch gekennzeichnet, dass** die dauerhafte Festlegung des Chipmoduls (1) durch einen Reibschweißvorgang erfolgt, bei dem Oberflächenteilbereiche (10) von Trägerelement (2) und Kartenkörper (7) miteinander in Berührung gebracht werden und durch eine mehrmalige hin- und hergehende schnelle Verschiebung der kontaktierten Oberflächenteilbereiche (10) relativ zueinander in Folge der entstehenden Reibungswärme die betreffenden Oberflächenteilbereiche (10) partiell aufgeschmolzen und verbunden werden.

2. Verfahren nach Anspruch 1, **dadurch gekennzeichnet, dass** die Verschiebung der kontaktierten Oberflächenteilbereiche (10) im Wesentlichen geradlinig erfolgt.

3. Verfahren nach Anspruch 1, **dadurch gekennzeichnet, dass** die Verschiebung der kontaktierten Oberflächenteilbereiche im Wesentlichen rotatorisch erfolgt.

4. Verfahren nach Anspruch 1, **dadurch gekennzeichnet, dass** die Verschiebung der kontaktierten Oberflächenteilbereiche im Wesentlichen durch eine kombinierte geradlinige und rotatorische Bewegung erfolgt.

5. Verfahren nach Anspruch 3, **dadurch gekennzeichnet, dass** das Trägerelement (2) eine im Wesentlichen rotationssymetrische Grundrissgestaltung aufweist.

6. Verfahren nach Anspruch 5, **dadurch gekennzeichnet, dass** die Ausnehmung (8) zur Aufnahme des Trägerelementes (2) eine im Wesentlichen rotationssymetrische Grundrissgestaltung aufweist.

7. Verfahren nach einem der Ansprüche 1 bis 6, **dadurch gekennzeichnet, dass** den kontaktierten Oberflächenteilbereichen (10) durch eine zusätzliche Vorrichtung (11) Wärmeenergie zugeführt wird.

8. Verfahren nach Anspruch 7, **dadurch gekennzeichnet, dass** die Wärmeenergiezufuhr mittels eines an der den kontaktierten Oberflächenbereichen abgewandten Oberseite des Trägerelementes aufgesetzten Heizstempels (11) erfolgt.

9. Verfahren nach Anspruch 7, **dadurch gekennzeichnet, dass** die Wärmeenergiezufuhr mittels einer Sonotrode erfolgt, welche an der den kontaktierten Oberflächenbereichen (10) abgewandten Oberseite des Trägerelementes aufgesetzt wird und Ultraschallschwingungen in den kontaktierten Oberflächenteilbereich (10) vom Trägerelement (2) und Kartenkörper (7) einbringt.
